# EUROPEAN PATENT APPLICATION

(11) **EP 4 614 114 A1**
(43) Date of publication of application: **10.09.2025**
(21) Application number: 24161785.1
(22) Date of filing: 06.03.2024
(51) Int. Cl.: G01D 18/00, G01D 21/00

(54) **SENSOR MAINTENANCE**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

A computer-implemented method of maintaining a deployed sensor unit is provided. The method receives (410) a raw sensor data stream from the deployed sensor unit (210). The method further receives (420) a set of calibration measurements associated with the deployed sensor unit, the set of calibration measurements being taken by a mobile reference sensor unit (220) whilst in proximity to the deployed sensor unit during a calibration period. The method determines (430) a drift of the deployed sensor unit based on the raw sensor data and the set of calibration measurements. The method further determines (440) whether the deployed sensor unit should be replaced based, at least in part, on the determined drift. The method schedules (460) a replacement of the deployed sensor unit in response to determining that the deployed sensor unit should be replaced and schedules (450) a further calibration of the deployed sensor unit in response to determining that the deployed sensor unit should not be replaced. The further calibration is to be undertaken by a mobile reference sensor unit whilst in proximity to the deployed sensor unit during a further calibration period to take a further set of calibration measurements.

## Description

### Field of the Invention

The present invention relates to sensor maintenance. In particular, it relates to the use a of a mobile reference sensor unit to monitor a deployed sensor unit to facilitate maintenance of the deployed sensor unit.

### Background to the Invention

There are a wide array of electronic sensors that are available for use to monitor a wide range of physical properties, such as temperature, humidity, and so on. With the advent of concepts such as the Internet of Things and Smart Cities, there are an ever-increasing number of sensors being deployed. Large numbers of such sensors may be distributed over a wide area making maintenance of those sensors time consuming and difficult. Additionally such sensors may be deployed to inaccessible (or at least difficult to access) locations, further complicating this task.

Electronic sensors generally work by producing an output signal based on a magnitude of a physical property that they are designed to monitor. This output signal is the product of the interaction between an electronic circuit in the sensor and its surroundings. A relationship between the output signal and the physical phenomenon can be derived allowing the output signal from the electronic sensor to be converted into data.

Sensor drift is a phenomenon that affects all sensors to varying degrees. It may be caused by a wide range of factors, such as environmental contamination, vibration, or extreme temperature fluctuations. Sensor drift results in the actual relationship between the physical property that a sensor is designed to monitor and the output signal that it produces changing over time. Accordingly, data that is produced from the output of a sensor based on a predefined (or previously observed) relationship between the sensor's output signal and the magnitude of the physical property being sensed may include a certain amount of error (or drift) from the true value. In general cheaper sensors that use lower quality components may be subject to a much greater degree of sensor drift than more expensive sensors that use higher quality components. The sensors that are typically deployed as part of the Internet of Things and Smart Cities are generally lower cost, and possibly lower quality, sensors (as this is generally necessitated to accommodate the quantity of sensors that are deployed) and so may be particularly subject to the issue of drift.

Sensor drift can be compensated for by calibrating a sensor using a separate control sensor that is known to be correct (or at least is more likely to provide a value that is more accurate). For example, a higher quality sensor may be used to calibrate a lower quality sensor. However, the amount (or rate) of sensor drift typically varies over time. Therefore, over the lifetime of a sensor, it is likely that multiple calibrations will be required. Furthermore, when the rate of sensor drift changes between calibrations, an amount of error will be re-introduced into the data obtained from the sensor until the sensor is re-calibrated.

Applicant's co-pending patent application WO 2023/180010 A1 discloses the use of an unmanned mobile entity to transport a reference sensor unit to the location of a deployed sensor unit. The reference sensor unit is arranged to measure the physical property at the location, allowing the performance of the deployed sensor unit to be evaluated based on a comparison of measurements from the reference sensor unit with those of the deployed sensor unit. The deployed sensor unit may be calibrated so as to offset a determined difference between the measurements of the reference sensor unit and the deployed sensor unit.

### Summary of the invention

The amount (or rate) of sensor drift experienced by a deployed sensor will typically vary over time. This is due, for example, to the gradual settling in of components at the start of a sensor's life as well as the degradation of those components over the course of the sensor's life. As a result, a sensor may experience relatively prolonged periods of stability in which the drift does not change much. Equally, a sensor may experience less stable periods in which its rate of drift changes more frequently. Indeed, towards the end of a sensor's life, the sensor may experience instability, with the rate of drift changes being such that the data produced by the sensor can no longer be relied upon (even where regular calibrations are carried out and corresponding corrections applied to the data collected from the sensor).

It would be desirable to carry out maintenance of a deployed sensor unit in a manner that accounts for the changes in the rate of drift that may be experienced during the deployed sensor unit's lifetime.

In a first aspect of the present invention, there is provided a computer-implemented method of maintaining a deployed sensor unit, the method comprising: receiving a raw sensor data stream from the deployed sensor unit; receiving a set of calibration measurements associated with the deployed sensor unit, the set of calibration measurements being taken by a mobile reference sensor unit whilst in proximity to the deployed sensor unit during a calibration period; determining a drift of the deployed sensor unit based on the raw sensor data and the set of calibration measurements; determining whether the deployed sensor unit should be replaced based, at least in part, on the determined drift; scheduling a replacement of the deployed sensor unit in response to determining that the deployed sensor unit should be replaced; and scheduling a further calibration of the deployed sensor unit in response to determining that the deployed sensor unit should not be replaced, the further calibration to be undertaken by a mobile reference sensor unit whilst in proximity to the deployed sensor unit during a further calibration period to take a further set of calibration measurements.

Through the use of a mobile reference sensor unit, the method enables the drift of a deployed sensor unit to be monitored and maintenance of the deployed sensor unit to be carried out in an efficient manner. Specifically, either replacement of the deployed sensor unit or further calibration of the deployed sensor unit may be scheduled based on the sensor's drift.

An interval between the calibration period and the further calibration period may be determined based, at least in part, on a predetermined baseline interval and the determined drift of the deployed sensor unit.

A duration of the future calibration period may be determined based, at least in part, on a predetermined baseline duration and the determined drift of the deployed sensor unit.

The method may further comprise: receiving one or more previous sets of calibration measurements associated with the deployed sensor unit, each previous set of calibration measurements being taken by a mobile reference sensor unit whilst in proximity to the deployed sensor unit during a previous calibration period occurring prior to the calibration period; and determining a respective drift of the deployed sensor unit during each of the previous calibration periods based on the raw sensor data and the respective set of calibration measurements for that calibration period.

The determination as to whether the deployed sensor unit should be replaced may be further based on the respective drift of the deployed sensor unit determined for each of the previous calibration periods.

The determination as to whether the deployed sensor unit should be replaced may be further based on a typical drift profile for a type of sensor corresponding to the deployed sensor unit.

The interval between the calibration period and the further calibration period may be determined further based on the respective drift of the deployed sensor unit determined for each of the previous calibration periods.

The determination as to whether the deployed sensor unit should be replaced may be further based on a typical drift profile for a type of sensor corresponding to the deployed sensor unit.

The duration of the further calibration period may be determined further based on the respective drift of the deployed sensor unit determined for each of the previous calibration periods.

The determination as to whether the deployed sensor unit should be replaced may be further based on a typical drift profile for a type of sensor corresponding to the deployed sensor unit.

In a second aspect of the present invention, there is provided a computer system comprising a processor and a memory storing computer program code for performing a method according to the first aspect.

In a third aspect of the present invention, there is provided a computer program comprising instructions which, when executed by a computer, cause the computer to carry out a method according to the first aspect.

### Brief Description of the Figures

Embodiments of the present invention will now be described by way of example only, with reference to the accompanying drawings, in which:
Figure 1 is a block diagram of a computer system suitable for the operation of embodiments of the present invention;
Figure 2 is a schematic diagram of an exemplary system with which embodiments of the invention may operate;
Figure 3 is a chart providing an exemplary illustration of the drift that may be experienced by a sensor over time; and
Figure 4 is a flowchart representation of a computer-implemented method of maintaining a deployed sensor unit according to embodiments of the invention.

### Detailed Description of Embodiments

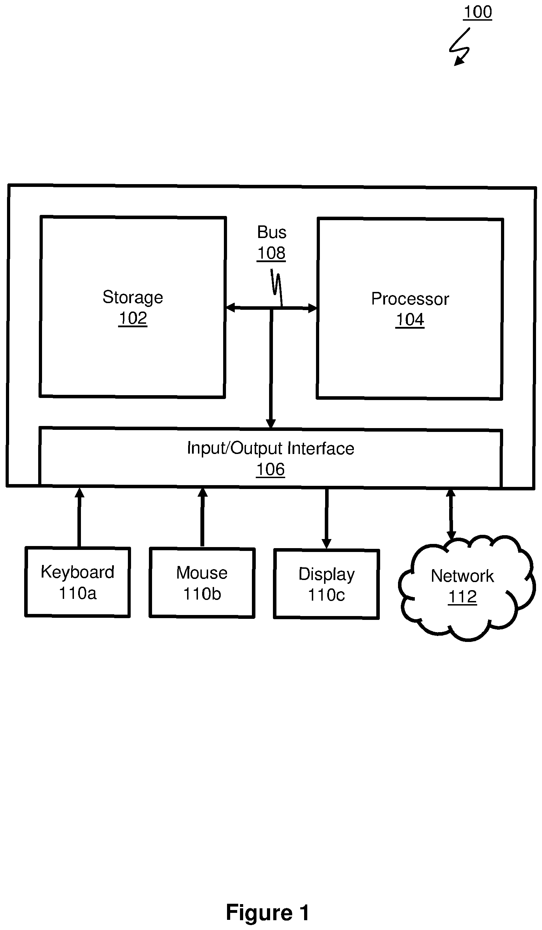

Figure 1 is a block diagram of a computer system 100 suitable for the operation of embodiments of the present invention. The system 100 comprises: a storage 102, a processor 104 and an input/output (I/O) interface 106, which are all communicatively linked over one or more communication buses 108.

The storage (or storage medium or memory) 102 can be any volatile read/write storage device such as a random access memory (RAM) or a non-volatile storage device such as a hard disk drive, magnetic disc, optical disc, ROM and so on. The storage 102 can be formed as a hierarchy of a plurality of different storage devices, including both volatile and non-volatile storage devices, with the different storage devices in the hierarchy providing differing capacities and response times, as is well known in the art.

The processor 104 may be any processing unit, such as a central processing unit (CPU), which is suitable for executing one or more computer programs (or software or instructions or code). These computer programs may be stored in the storage 102. During operation of the system, the computer programs may be provided from the storage 102 to the processor 104 via the one or more buses 108 for execution. One or more of the stored computer programs, when executed by the processor 104, cause the processor 104 to carry out a method according to an embodiment of the invention, as discussed below (and accordingly configure the system 100 to be a system 100 according to an embodiment of the invention).

The input/output (I/O) interface 106 provides interfaces to devices 110 for the input or output of data, or for both the input and output of data. The devices 110 may include user input interfaces, such as a keyboard 110a or mouse 110b as well as user output interfaces such as a display 11 0c. Other devices, such a touch screen monitor (not shown) may provide means for both inputting and outputting data. The input/output (I/O) interface 106 may additionally or alternatively enable the computer system 100 to communicate with other computer systems via one or more networks 112. It will be appreciated that there are many different types of I/O interface that may be used with computer system 100 and that, in some cases, computer system 100 may include more than one I/O interface. Furthermore, there are many different types of device 110 that may be used with computer system 100. The devices 110 that interface with the computer system 100 may vary considerably depending on the nature of the computer system 100 and may include devices not explicitly mentioned above, as would be apparent to the skilled person. For example, in some cases, computer system 100 may be a server without any connected user input/output devices. Such a server may receive data via a network 112, carry out processing according to the received data and provide the results of the processing via a network 112.

It will be appreciated that the architecture of the system 100 illustrated in figure 1 and described above is merely exemplary and that other computer systems 100 with different architectures (such as those having fewer components, additional components and/or alternative components to those shown in figure 1) may be used in embodiments of the invention. As examples, the computer system 100 could comprise one or more of: a personal computer; a laptop; a tablet; a mobile telephone (or smartphone); a television set (or set top box); a games console; an augmented/virtual reality headset; a server; or indeed any other computing device with sufficient computing resources to carry out a method according to embodiments of this invention.

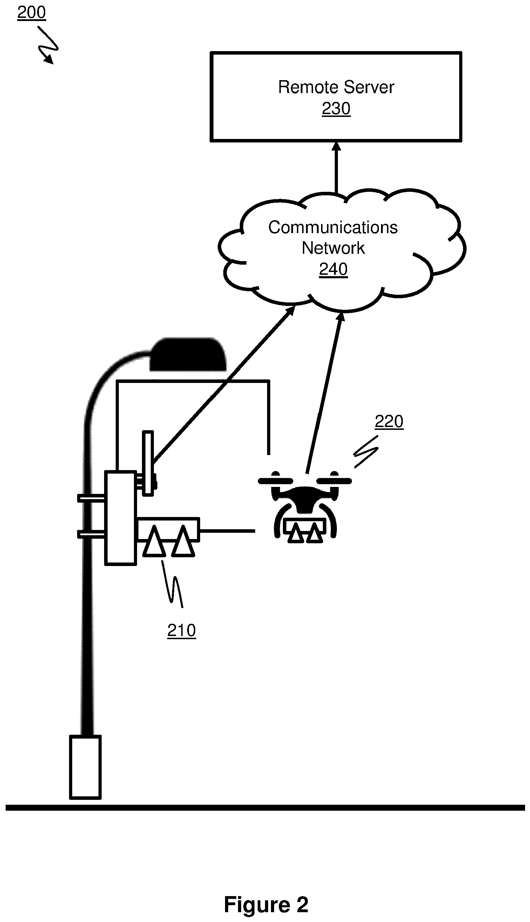

Figure 2 is a schematic diagram of an exemplary system 200 with which embodiments of the invention may operate. The system 200 comprises a deployed sensor unit 210, a mobile reference sensor unit 220 and a remote server 230.

The deployed sensor unit 210 includes one or more sensors that are suitable for taking measurements of a respective physical property from the area surrounding the sensor unit 210. As examples, the sensors included in the sensor unit 210 may include one or more, or all, of: an air temperature sensor, an air quality sensor, a humidity sensor, a wind speed sensor, a road surface temperature sensor. Although of course, any other suitable type of sensor may be included instead of, or in addition to, these examples.

The deployed sensor unit 210 is located at a site where it is desired to collect measurements of the one or more physical properties using the sensors within the sensor unit 210. In the example shown in figure 2, the deployed sensor unit 210 is fixed to a street light. However, it will be appreciated that the sensor unit 210 may be deployed in any other suitable location, provided that it can still be reached by the mobile reference sensor unit 220.

The deployed sensor unit 210 is communicatively coupled to the remote server 230 via one or more communication networks 240. The network 240 may be any suitable type of network such as a Local Area Network (LAN), Wide Area Network (WAN), Metropolitan Area Network (MAN) or the Internet and may utilise any suitable type of medium and associated protocols, such as a wired, wireless and/or cellular networks, as will be appreciated by those skilled in the art. The deployed sensor unit 210 includes network equipment suitable for packetizing and sending the measurements from the one or more sensors to the remote server 230 via the one or more communication networks 240.

In operation, the deployed sensor unit 210 repeatedly measures the one or more physical properties using the sensor(s) and sends the measurements to the remote server 230 through the one or more communication networks 240. In some cases, for example, the measurements may be taken at regular time intervals measured in seconds, minutes, hours etc. In other cases, the measurements may be taken at irregular time intervals. In some cases the deployed sensor unit 210 may carry out some processing on the output signals before sending them to the remote server 230, such as converting the output signal from the sensor(s) to a value in suitable units for the physical property being monitored. However, in other cases, the output signal value may be directly sent for conversion by the remote server 230.

The mobile reference sensor unit 220 includes one or more sensors including at least one sensor that measures the same physical quantity as the deployed sensor unit 210. That at least one sensor is a sensor which is expected to produce smaller errors than those in the deployed sensor unit 210. For example, this may be achieved by using higher quality sensors in the mobile reference sensor unit 220 than are used in the deployed sensor unit 210. Additionally or alternatively, this may be achieved by more frequently calibrating the one or more sensors of the mobile reference sensor unit 220.

The mobile reference sensor unit 220 is attached or mounted to a vehicle or other mobile or movable entity that is able to transport the mobile reference sensor unit 220 to and from the location at which the deployed sensor unit 210 is sited. For example, the reference sensor unit 220 may be attached to drone or unmanned aerial vehicle (UAV), as shown in figure 2. However, any suitable mobile entity may be used instead. As further examples, the mobile reference sensor unit 220 may be attached to a wheeled vehicle (such as an unmanned ground vehicle) or temporary tower. As will be appreciated, the mounting of the mobile reference sensor unit 220 on the mobile entity enables the mobile reference sensor unit 220 to be transported between many different deployed sensor units across a wide geographical area, allowing the same mobile reference sensor unit 220 to be used to calibrate a large number of deployed sensor units. It also enables the mobile reference sensor unit 220 to be transported to a suitable location for carrying out maintenance on the mobile reference sensor unit 220 (such as by replacing or recalibrating one or more sensors of the mobile reference sensor unit 220). The use of unmanned vehicles to transport the mobile reference sensor unit 220 can reduce the operator burden for the system 200 because a human operator is not required to calibrate the sensor unit 106. In particular, where a UAV is used, it allows the mobile reference sensor unit 220 to be transported to sites that may be inaccessible from the ground.

The mobile reference sensor unit 220 is communicatively coupled to the remote server 230 via one or more communication networks 240. That is to say, it comprises network equipment capable of sending calibration measurements to the remote server 230 via the one or more communications network 240. In some cases, the one or more communication networks 240 used by the mobile reference sensor unit 220 to communicate with the remote server 230 may be the same as those used by the deployed sensor unit 210. However, in other cases, different networks may be used. In some cases, the calibration measurements from the mobile reference sensor unit 220 may be transmitted substantially at the same time that they are collected. However, in other cases, the calibration measurements may be stored in a storage local to the mobile reference sensor unit 220 (i.e. onboard the mobile entity) for later transmission to the remote server 230. For example, the calibration measurements may be retrieved from the mobile reference sensor unit 220 when it returns to a base from which it operates. Alternatively, the mobile reference sensor unit 220 may transmit the measurements after it has left the vicinity of the deployed sensor unit 210.

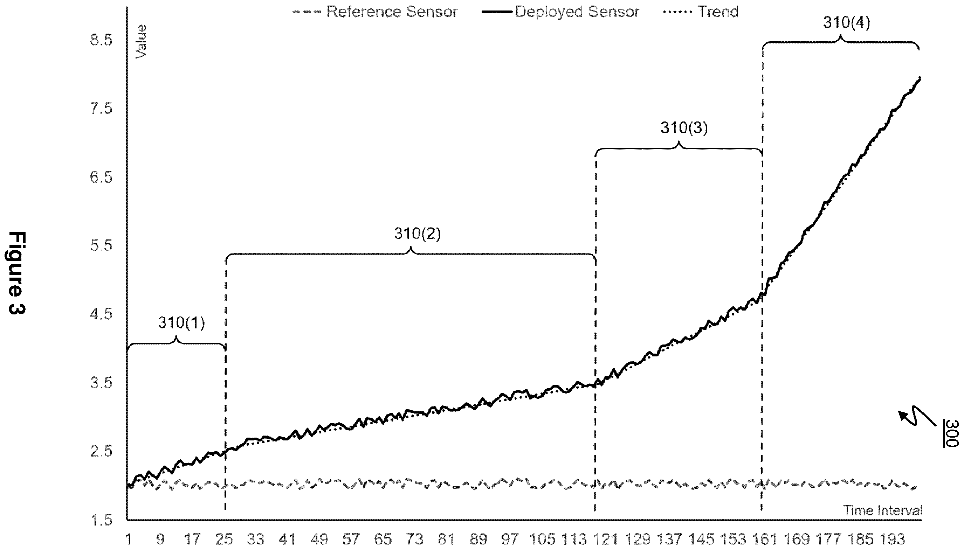

Figure 3 is a chart 300 providing an exemplary illustration of the drift that may be experienced by a sensor, such as the deployed sensor unit 210 shown in figure 2, over time. The graph shows two data series. A first data series plotted on the chart 300 corresponds to data that may be obtained by the deployed sensor unit 210. This first data series is plotted using a solid line. A second data series plotted on the chart 300 corresponds to data that may be obtained by a reference sensor, such as the mobile reference sensor unit 220, at the same location at the deployed sensor unit 210. This second data series is plotted using a dashed line. The difference between the two data series is the result of drift experienced by the deployed sensor unit 210. The rate of drift being experienced by the deployed sensor unit 210 is illustrated by the trend line that is also plotted on the chart 300 using a dotted line.

As can be seen, the drift shown in this exemplary illustration is not constant throughout the life of the deployed sensor unit 210. Instead, the sensor in this example goes through four distinct phases 310 as it progresses through its lifecycle. As can be seen, whilst the drift is relatively constant during each phase 310, the rate of drift changes between the different phases 310. For example, in a first phase 310(1), a moderate level of drift may be experienced. This initial level of drift during the first phase 310(1) may be considered to be a "*settling in"* phase for the deployed sensor unit 210. After the first phase 310(1), a longer second phase 310(2) having a lower rate of drift may be experienced. This second phase 310(2) may be considered to be the "*normal operation"* phase for the deployed sensor. The change in drift between the first and second phases may be caused, for example, by the components settling down after their initial usage. After the second phase 310(2), a shorter third phase 310(3) having an elevated rate of drift may be experienced. This third phase 310(3) may be considered to be a "*breakdown phase"* for the deployed sensor. The change in drift between the second and third phases may be caused, for example, by the components starting to breakdown as a result of aging. After the third phase 310(3), a fourth phase 310(4) having a high level of drift may be experienced. This fourth phase 310(4) may be considered to be an "*unstable phase"* for the deployed sensor. The higher level of drift experienced during the fourth phase 310(4) may be caused, for example, by the components breaking down further resulting in increasingly unpredictable behaviour.

As discussed above it is possible to compensate for the drift by carrying out a calibration of the sensor using a separate control sensor, such as the mobile reference sensor unit 220 shown in figure 2. In particular, the mobile reference sensor unit 220 may visit the deployed sensor unit 210 for a period of time, which may be referred to as a calibration period (or window) to collect data for calibrating the deployed sensor unit 210 (which may be referred to as calibration data). By analysing the measurements from both the deployed sensor unit 210 and the mobile reference sensor unit 220 during a calibration period, an offset and rate of drift for the data from the deployed sensor unit 210 can be determined and used to correct the data received from the deployed sensor unit 210 (i.e. so that it more closely matches the values that would be obtained by the mobile reference sensor unit 220 if it were at the location of the deployed sensor unit 210). This calibration process may be performed regularly, for example at predetermined intervals in order to recalibrate the sensor to account for the changing drift. Where the drift changes between calibration visits, the corrected data stream may become erroneous again. That is, the existing calibration used with the readings from the deployed sensor unit 210 will cease to provide an accurate correction to the sensor data owing to the change in the rate of drift. It is therefore desirable for the calibration process to be performed as close as possible to a change in drift so as to minimise such errors. However, there is a cost associated with each calibration visit. Not only is there the actual cost involved in having the mobile reference sensor unit 220 visit the deployed sensor unit 210, but there is also an opportunity cost. In particular, whilst the mobile reference sensor unit 220 is visiting the deployed sensor unit 210 for calibration it cannot be calibrating any other deployed sensor units 210. Therefore, carrying out unnecessary calibration visits results in a reduction in the number of deployed sensor units 210 that can be supported by each mobile reference sensor unit 220. Furthermore, at a certain point in its lifecycle, the deployed sensor unit 210 will enter an "*unstable phase"* resulting, for example, from the breakdown of its constituent components. During this unstable phase, the drift experienced may vary at a high rate making it impractical if not impossible to utilise the sensor in an economical and/or reliable way. It would therefore be desirable to optimise (or at least improve) the maintenance activity, that is the scheduling of calibration visits and ultimately the replacement of the deployed sensor unit 210, in order to improve the accuracy of measurements that are received from the deployed sensor unit 210 and minimise the cost associated with calibration visits by the mobile reference sensor unit 220.

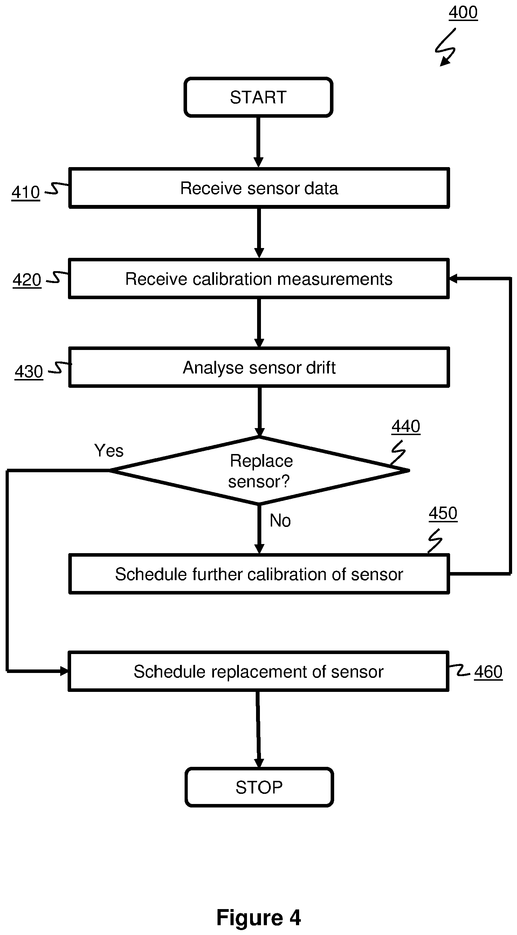

Figure 4 is a flowchart representation of a computer-implemented method 400 of maintaining a deployed sensor unit, such as the deployed sensor unit 210 shown in figure 2, according to embodiments of the invention. The method 400 may be performed, for example, by computer system 100. The method 400 starts at an operation 410.

At operation 410, the method 400 receives the raw sensor data stream from the deployed sensor unit 210. The raw sensor data is the actual measurements taken by the deployed sensor unit 210 including any offset or drift (i.e. prior to any correction that may be performed as part of the sensor's calibration). This raw sensor data is the data series that is plotted for the deployed sensor unit 210 on the chart shown in figure 3. In some cases, the raw sensor data may be provided directly from the deployed sensor unit 210. In other cases, the raw sensor data may be derived from a calibrated data stream by removing the corrections that have been applied to create the calibrated data stream from the calibrated data stream. That is to say, with knowledge of the determined offset and drift that is being used to calibrate the raw sensor data, the calibration can be reversed to obtain the raw sensor data from the calibrated data stream.

At operation 420, the method 400 receives a set of calibration measurements associated with the deployed sensor unit 210. These calibration measurements are measurements that have been taken by a mobile reference sensor unit 220 during a calibration period for the deployed sensor unit 210. During the calibration period, the mobile reference sensor unit 220 is in proximity to the deployed sensor unit 210 (i.e. it travels to the deployed sensor unit 210 in order to take the calibration measurements during the calibration period). In some cases, the mobile reference sensor unit 220 may be within 1 or 2 meters of the deployed sensor unit 210 for the duration of the calibration period. However, it will be appreciated that this is not strictly necessary. In general, the required proximity between the mobile reference sensor unit 220 and the deployed sensor unit is such that they both can be expected to read the same measurements for the physical quantity (or quantities) being measured. During the course of the calibration period, the mobile reference sensor unit 220 takes measurements of the same physical quantity (or quantities) that is (or are) measured by the raw sensor unit 210. In some cases these measurements may be taken at regular intervals throughout the calibration period. However, in other cases, the measurements may be taken irregularly throughout the calibration period. In some cases, the set of calibration measurements may be received substantially contemporaneously with the taking of the measurements by the mobile reference sensor unit 220. In other cases, the set of calibration measurements may be received some time after the calibration period to which they relate. In some cases, the set of calibration measurements may be received directly from the mobile reference sensor unit 220. In other cases, the set of calibration measurements may be received indirectly. For example, the set of calibration measurements may be stored in a storage by the mobile reference sensor unit 220 and the method may retrieve the set of calibration measurements from that storage. Having received a set of calibration measurements for the deployed sensor unit 210, the method 400 proceeds to an operation 430.

At operation 430, the method 400 analyses the sensor data in order to determine a drift of the deployed sensor unit 210. As will be appreciated by those skilled in the art, the drift can be determined based on the raw sensor data (received at operation 410) and the set of calibration measurements (received at operation 420). Specifically, an offset or error can be determined between each calibration measurement in the set of calibration measurements and a corresponding measurement from the raw sensor data (that is a measurement from the raw sensor data that was taken at substantially the same time as the calibration measurement). Similarly, a rate of drift can be determined by determining a difference between the offset or error between an earlier calibration measurement in the set of calibration measurements and its corresponding measurement from the raw sensor data and the offset or error between a later calibration measurement in the set of calibration measurements and its corresponding measurement from the raw sensor data. In other words, the drift can be determined from the change in error between the two sets of measurements over the course of the calibration window. Of course, it will be appreciated that various averaging techniques may additionally be used in order to avoid the impact from erroneous readings. For example, the average error between a predetermined number of calibration measurements and their corresponding measurements in the raw sensor data may be determined and a difference between the average error for the calibration measurements earlier on in the calibration window and the average error for the calibration measurements later on in the calibration window may be determined. The change in error across the calibration window divided by the duration of the calibration window will then provide a change in the error per unit of time, which is the rate of drift for the sensor. Having determined a drift for the deployed sensor unit 210 from the calibration measurements, the method 400 proceeds to an operation 440.

At operation 440, the method 400 determines whether the deployed sensor unit 210 should be replaced. This determination is based, at least in part on the drift that has been determined for the deployed sensor unit 210 (at operation 430). In the simplest cases, this determination may be made based on whether the drift determined for the deployed sensor unit 210 exceeds a predetermined threshold. For example, a predetermined threshold may be specified that corresponds to the rate of drift that would be experienced by the deployed sensor unit 210 during its "*breakdown phase"* 310(3). Accordingly, once the deployed sensor unit 210 has entered this "*breakdown phase"* 310(3), it may be determined (at the next calibration period to occur during that phase) to replace the deployed sensor unit 210. This may prevent the deployed sensor unit 210 from reaching the "unstable phase" 310(4) (or otherwise minimise the length of time in which the deployed sensor unit 210 is operating in the "unstable phase" 310(4)) during which it may no longer be possible to correct the measurements that are taken by the deployed sensor unit 210. Therefore replacement of the deployed sensor unit 210 at this point can help to ensure minimal disruption to the measurements of the physical quantity that are being taken by the deployed sensor unit 210 and reduce or eliminate the resulting disruption to any systems relying on those measurements for their operation. It will be appreciated that other techniques for determining whether the deployed sensor unit 210 should be replaced may also be used. One such alternative technique will be discussed below. In general the goal is to replace the deployed sensor unit 210 before it reaches a point that it can no longer be relied upon (or at least to minimise the amount of time that the deployed sensor unit 210 spends in such a state). Having determined that the deployed sensor unit should be replaced, the method 400 proceeds to an operation 460. Otherwise, the method proceeds to an operation 450.

At operation 450, the method 400 schedules a further calibration of the deployed sensor unit 210. The further calibration is to be undertaken by a mobile reference sensor unit 220 whilst in proximity to the deployed sensor unit 210. That is, the method 400 causes a mobile reference sensor unit 220 to visit the deployed sensor unit 210 during a future calibration period to take a further set of calibration measurements. For example, the method 400 may enter a request for a calibration of the deployed sensor unit 210 into an automated scheduling system for the mobile reference sensor unit 220. The automated scheduling system may control the operation of one or more mobile reference sensor units 220 to undertake the calibration of a large number of deployed sensor units 210. Accordingly, by entering the request for the calibration visit into the automated scheduling system, the automated scheduling system may allocate a resource (i.e. one of the mobile reference sensor units 220) to undertake a mission in order to carry out the calibration of the deployed sensor unit 210 during the future calibration period. In some cases, the same mobile reference sensor unit 220 may be used to carry out the future calibration of the deployed sensor unit 210 as was used to carry out the current calibration. However, in other cases, different mobile reference sensor units 220 may be used. As will be appreciated by those skilled in the art, where multiple mobile reference sensor units 220 are used, these may all be calibrated to achieve the same (or similar) readings as each other by utilising a single reference sensor to calibrate each of the mobile reference sensor units 220.

As part of the scheduling of the future calibration period, the method 400 may determine an interval between the latest calibration period and the future calibration period. That is to say, the method 400 may determine when the future calibration period should begin. In some cases, the future calibration period may be scheduled so that a predetermined interval (which may be referred to as the baseline interval) between calibration periods is maintained. Of course, in some cases, some variation from the baseline interval may be permitted. For example, the automated scheduling system for the mobile reference sensor unit(s) 220 may, in some cases, be permitted to adjust the scheduling of the future calibration period within certain bounds in order to improve the scheduling of its resources. Additionally, in some cases, the method 400 may itself adjust the interval between the current calibration period and the future calibration period to be different from the baseline interval. For example, where the current rate of drift is very low (e.g. where it is lower than a predetermined threshold), the method 400 may extend the baseline interval to permit a longer period of time between the current calibration period and the future calibration period. This may be beneficial since, at low rates of drift, it may be expected that it is unlikely that the drift will change very quickly and so less frequent calibration of the deployed sensor unit 210 may be acceptable. Similarly, where the current rate of drift is high (e.g. where it is higher than a predetermined threshold), the method 400 may shorten the baseline interval to permit a shorter period of time between the current calibration period and the future calibration period. This may be beneficial since, at higher rates of drift, it may be expected that the drift will change more quickly and so more frequent calibration of the deployed sensor unit 210 may be appropriate.

The method 400 may also determine a duration of the future calibration period as part of the scheduling of the future calibration period. In some cases, the duration of the calibration period may be based on a predetermined duration (which may be referred to as the baseline duration) such that all calibration periods have substantially the same duration. Again, in some cases, some variation from the baseline duration may be permitted. For example, the automated scheduling system for the mobile reference sensor units 220 may, in some cases, be permitted to adjust the duration of the scheduled future calibration period within certain bounds in order to improve the scheduling of its resources. Additionally, in some cases, the method 400 may itself adjust the duration of the future calibration period to be different from the baseline duration. For example, the baseline duration may be adjusted based on the rate of drift of the deployed sensor unit 210 (as determined from the latest set of calibration measurements). For example, the higher the rate of drift, the longer the duration of the next calibration period may be. This can help to provide improve the confidence in the measurements of the rate of drift, as it gets closer to making the decision as to whether to replace the deployed sensor unit 210.

Having scheduled the further calibration of the deployed sensor unit 210, the method 400 may wait until the calibration measurements for the future calibration period have been taken and then reiterate back to operation 420 to perform operations 420, 430, 440 and 450 or 406 in respect of those new calibration measurements.

At operation 460, the method 400 schedules a replacement of the deployed sensor unit 210. For example, the method 400 may make an entry in a work scheduling system that is responsible for scheduling maintenance activity by those responsible for replacing deployed sensor units 210. In some cases, this entry may request that the deployed sensor unit 210 is replaced as soon as possible. However, in other cases, the entry may provide more details to enable the request to be prioritised in an appropriate manner. For example, the entry may indicate how urgent the replacement is, such as by indicating how far over the predetermined threshold rate of drift the current rate of drift for the deployed sensor unit 210 is (since the further over the threshold, the closer the deployed sensor unit 210 may be to entering the "*unstable phase"* 310(4) at which point it can no longer be relied on for accurate measurements). Having scheduled the replacement of the deployed sensor unit 210 at operation 460, the method 400 ends.

In the above discussion of the method 400 only the latest set of calibration measurements for the deployed sensor unit 210 are used. That is, the decision as to whether to replace the deployed sensor unit (at operation 440), the scheduling of a further calibration of the deployed sensor unit 210 (at operation 450) and the scheduling of the replacement of the deployed sensor unit (at operation 460) were all based on a single set of calibration measurements (i.e. the current set of calibration measurements). However, it will be appreciated that in some cases, these operations 440, 450 and/or 460 may additionally make use of one or more previous sets of calibration measurements associated with the deployed sensor unit 210.

Each of the previous sets of calibration measurements may be taken by a mobile reference sensor unit 220 (not necessarily the same mobile reference sensor unit 220) whilst in proximity to the deployed sensor unit 210 during a respective previous calibration period. Each set of previous calibration measurements may, for example, be received by the method 400 during a respective previous iteration of the method 400 (at operation 420 of that iteration) performed in respect of that set of previous calibration measurements. The method 400 may determine a respective drift of the deployed sensor unit 210 during each of the previous calibration periods. Again, the determination of the respective drift of the deployed sensor unit 210 for each of the previous calibration periods may be made by the method 400 during a respective previous iteration of the method 400 (at operation 430 of that iteration) performed in respect of that set of previous calibration measurements. As described earlier in relation to operation 430, the determination of the drift during each of the previous calibration periods may be made by comparing the raw sensor data covering that previous calibration period with the respective set of previous calibration measurements for that previous calibration period.

Accordingly, the method 400 may have access to historical information regarding the drift of the deployed sensor unit 210 - that is the drift experienced by the deployed sensor unit 210 at a plurality of points in time (i.e. for the current calibration period and each of the previous calibration periods). The method 400 may use this historical information to adjust its behaviour as regards to deciding (at operation 440) whether the deployed sensor unit 210 needs to be replaced, as well as in the scheduling of the replacement of the deployed sensor unit 210 (at operation 460) or the scheduling of a further calibration of the deployed sensor unit 210 (at operation 450). This may enable the method 400 to better prevent the deployed sensor unit 210 from entering its "*unstable"* phase 310(4) of operation (or at least further reduce the amount of time the deployed sensor unit 210 operates in that state). It may also enable the method 400 to defer replacement of the deployed sensor unit 210 until closer to the end of its useful life (i.e. as close as possible to the point at which it enters the "unstable" phase 310(4)).

In some cases, the method 400 may employ a heuristic approach to incorporating this historical information into its decision making. For example, the duration of the next calibration period (scheduled at operation 450) may be based on the number of times the rate of drift has increased. That is, how many times the rate of drift has increased between each of the previous calibration periods, as well as between the most recent previous calibration period and the latest calibration period, may be used to determine the duration of the next calibration period. In particular, the duration of the next calibration period may be increased where a greater number of drift increases has been experienced by the deployed sensor unit 210. This enables greater certainty of the rate of drift of the sensor to be obtained as the sensor ages. Similarly, the interval between the current calibration period and the next calibration period (scheduled at operation 450) may also be based on the number of times the rate of drift has increased. In this case, the interval may be shortened where a greater number of drift increases has been experienced by the deployed sensor unit 210. That is, the sensor may be watched more closely as it ages. Of course it will be appreciated, that other factors may be introduced into such heuristics. For example, a predetermined threshold may be utilised to determine whether an increase between previous calibration periods is considered to be significant enough to count as an increase for the purposes of the heuristic. Similarly, the heuristic may employ a "windowing" approach to its assessment. That is to say, the heuristic may only consider the historical measurements within a certain preceding "window" - which may be either a preceding period of time or a predetermined number of the most recent previous calibration periods. This may allow the monitoring of the deployed sensor unit 210 to be adapted according to the current changeability of the rate of drift for the deployed sensor unit 210. That is to say, the monitoring may increase (i.e. by shortening the interval between calibration periods and/or increasing the duration of the calibration periods) when the deployed sensor unit 210 is experiencing a high rate of drift change (e.g. multiple recent increases in drift within the window) and may decrease (i.e. by lengthening the interval between calibration periods and/or decreasing the duration of the calibration periods) when the deployed sensor unit 210 is experiencing relative stability (e.g. no, or relatively few, increases in drift within the window).

In some cases, the method 400 may actively use the historical information to predict the drift changes that will be experienced by the deployed sensor unit 210. These predictions may then be used to guide the decisions as to whether the sensor should be replaced (at operation 440), as well as the scheduling of that replacement (at operation 460) and/or the scheduling of a further calibration of the deployed sensor unit 210 (at operation 450). As will be appreciated, there are many techniques for extrapolating from the historical information to determine future drift changes for the deployed sensor unit 210 and, indeed, any suitable technique may be used. As an example, the rate of change of the rate of drift for the deployed sensor unit 210 over time may be used to determine at what point in time the rate of drift will exceed the predetermined threshold for replacing the sensor unit 210.

In some cases, the prediction may incorporate an expected drift profile for the deployed sensor unit 210. This expected drift profile may represent the expected changes in drift over time over the lifecycle of that type of sensor unit. The historical information may then be used together with the drift profile to ascertain what stage in its lifecycle it is currently at and therefore predict the point in time at which the rate of drift will exceed the predetermined threshold for replacing the sensor unit 210.

In some cases, machine learning may be used to create a model for predicting the point in time at which the rate of drift will exceed the predetermined threshold for replacing the deployed sensor unit. Any suitable machine learning techniques, such as LSTM, may be used for this purpose. The model may be trained by using the machine learning technique together with a set of training data to produce a trained model that is capable of predicting the future drift rates for the sensor unit 210 based on the historical data. The training data comprises a set of drift data collected over the lifecycles of many different sensors. In some cases, the training data may comprise drift data collected from many different types of different sensor in which case the model that is produced may be a generic model for use with all types of sensor. Preferably, however, the training data comprises drift data collected from the sensors of the same type as the deployed sensor unit 210. As will be appreciated by those skilled in the art, such machine learning techniques may generate a model that effectively incorporates the expected drift profile for the deployed sensor unit 210.

Where such predictions are made, the decision as to whether the sensor should be replaced (at operation 440) may be based on those predictions. For example, the method 400 may determine whether a time at which the rate of drift of the deployed sensor unit 210 is predicted to exceed the predetermined threshold for replacement of the deployed sensor unit 210 is within a predetermined period of time. If so, the method 400 may schedule replacement of the deployed sensor unit 210 (at operation 460) for some point prior to that point in time (i.e. before the drift experienced by the deployed sensor unit 210 is predicted to exceed the predetermined threshold). For example, the method 400 may make an entry in a work scheduling system that is responsible for scheduling maintenance activity as discussed above. This entry may include an indication of the predicted time at which the deployed sensor unit 210 will exceed the predetermined threshold for its replacement to allow prioritisation of the replacement request. Otherwise, if the deployed sensor unit 210 is not predicted to exceed the predetermined threshold for replacement within the predetermined period of time, the method 400 may schedule a future calibration for the sensor 210 (at operation 450). In some cases, the time for which the future calibration is scheduled (i.e. the interval between the current calibration period and the future calibration period) may also be based on such predictions. For example, the future calibration period may be scheduled to take place at least a certain amount of time before the time at which the rate of drift of the deployed sensor unit 210 is predicted to exceed the predetermined threshold for its replacement. As another example, another prediction may be made as to a time that the rate of drift of the deployed sensor unit 210 will have increased by a predetermined amount. The future calibration period may then scheduled to take place at that time.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example. Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention. It will be understood by those skilled in the art that, although the present invention has been described in relation to the above-described example embodiments, the invention is not limited thereto and that there are many possible variations and modifications which fall within the scope of the invention. The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A computer-implemented method of maintaining a deployed sensor unit, the method comprising:
receiving a raw sensor data stream from the deployed sensor unit;
receiving a set of calibration measurements associated with the deployed sensor unit, the set of calibration measurements being taken by a mobile reference sensor unit whilst in proximity to the deployed sensor unit during a calibration period;
determining a drift of the deployed sensor unit based on the raw sensor data and the set of calibration measurements;
determining whether the deployed sensor unit should be replaced based, at least in part, on the determined drift;
scheduling a replacement of the deployed sensor unit in response to determining that the deployed sensor unit should be replaced; and
scheduling a further calibration of the deployed sensor unit in response to determining that the deployed sensor unit should not be replaced, the further calibration to be undertaken by a mobile reference sensor unit whilst in proximity to the deployed sensor unit during a further calibration period to take a further set of calibration measurements.

2. The method of claim 1, wherein an interval between the calibration period and the further calibration period is determined based, at least in part, on a predetermined baseline interval and the determined drift of the deployed sensor unit.

3. The method of claim 1 or claim 2, wherein a duration of the future calibration period is determined based, at least in part, on a predetermined baseline duration and the determined drift of the deployed sensor unit.

4. The method of any one of the preceding claims, further comprising:
receiving one or more previous sets of calibration measurements associated with the deployed sensor unit, each previous set of calibration measurements being taken by a mobile reference sensor unit whilst in proximity to the deployed sensor unit during a previous calibration period occurring prior to the calibration period; and
determining a respective drift of the deployed sensor unit during each of the previous calibration periods based on the raw sensor data and the respective set of calibration measurements for that calibration period.

5. The method of claim 4, wherein the determination as to whether the deployed sensor unit should be replaced is further based on the respective drift of the deployed sensor unit determined for each of the previous calibration periods.

6. The method of claim 5, wherein the determination as to whether the deployed sensor unit should be replaced is further based on a typical drift profile for a type of sensor corresponding to the deployed sensor unit.

7. The method of any one of claims 4 to 6 when dependent on claim 2, wherein the interval between the calibration period and the further calibration period is determined further based on the respective drift of the deployed sensor unit determined for each of the previous calibration periods.

8. The method of claim 7, wherein the determination as to whether the deployed sensor unit should be replaced is further based on a typical drift profile for a type of sensor corresponding to the deployed sensor unit.

9. The method of any one of claims 4 to 8 when dependent on claim 3, wherein the duration of the further calibration period is determined further based on the respective drift of the deployed sensor unit determined for each of the previous calibration periods.

10. The method of claim 9, wherein the determination as to whether the deployed sensor unit should be replaced is further based on a typical drift profile for a type of sensor corresponding to the deployed sensor unit.

11. A computer system comprising a processor and a memory storing computer program code for performing the steps of any one of claims 1 to 10.

12. A computer program comprising instructions which, when executed by a computer, cause the computer to carry out the method of any one of claims 1 to 10.
